# EUROPEAN PATENT APPLICATION

(11) **EP 3 582 191 A1**
(43) Date of publication of application: **18.12.2019**
(21) Application number: 19174198.2
(22) Date of filing: 13.05.2019
(51) Int. Cl.: G07C 9/00

(54) **VEHICLE SECURITY SYSTEM AND OPERATING METHOD THEREOF**

(30) Priority: 15.06.2018 TW 107120843
(71) Applicant: Acer Incorporated, New Taipei City 221 (TW)
(72) Inventor: CHEN, Kuan-Yu, 221 New Taipei City (TW)
(74) Representative: dompatent von Kreisler Selting Werner - Partnerschaft von Patent- und Rechtsanwälten mbB

(57) **Abstract**

A vehicle security system and an operating method thereof are provided. The operating method includes the following steps: A account binding procedure between a first mobile device and the vehicle is performed, such that a vehicle processing device of the vehicle obtains a main access token for the first mobile device to perform a first electronic unlocking procedure and a sub access token for a second mobile device to perform a second electronic unlocking procedure. The second mobile device performs the second electronic unlocking procedure according to the sub access token.

## Description

### BACKGROUND OF THE INVENTION

### Field of the Invention

The invention relates in general to a security system and an operating method thereof, and more particularly to a vehicle security system and an operating method thereof.

### Description of the Related Art

In modern society, vehicles, such as motor bikes, bicycles and cars, are commonly used for transportation. However, conventional physical key of vehicle has the risk of being stolen or copied. Those with evil intentions may activate others people's vehicles using stolen or copied physical keys and successfully steal them. Therefore, it has become a prominent task for the industries to increase the vehicle security system using the latest technology.

### SUMMARY OF THE INVENTION

The invention relates to a vehicle security system and an operating method thereof, in which a first mobile device is used as an electronic key of the vehicle. The user can unlock the vehicle using the first mobile device. Or, the security system may allow the electronic key provided by the first mobile device to be used in conjunction with a physical key to increase security. Besides, the architecture of the security system may further include a second mobile device, such that the user can set different authority limits to the electronic key. Moreover, the sub access token can be updated, such that the second mobile device, despite having obtained the sub access token, can no longer be used as an electronic key. Additionally, the architecture of the security system may include a third mobile device, which can replace the function of the first mobile device as an electronic key when the user gets lost of the first mobile device.

According to one embodiment of the invention, an operating method of a vehicle security system is provided. The operating method includes the following steps: An account binding procedure between a first mobile device and the vehicle is performed, such that a vehicle processing device of the vehicle obtains a main access token for the first mobile device to perform a first electronic unlocking procedure and a sub access token for a second mobile device to perform a second electronic unlocking procedure. The second mobile device performs the second electronic unlocking procedure according to the sub access token.

According to another embodiment of the invention, a vehicle security system is provided. The vehicle security system includes a vehicle processing device, a first mobile device and a second mobile device. The vehicle processing device is disposed on the vehicle. The first mobile device performs an account binding procedure, such that the vehicle processing device obtains a main access token for the first mobile device to perform a first electronic unlocking procedure and a sub access token for a second mobile device to perform a second electronic unlocking procedure.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 is a schematic diagram of a vehicle security system according to an embodiment of the invention.
FIG. 2 is a flowchart of an account binding procedure according to an embodiment of the invention.
FIG. 3 is a flowchart of a first electronic unlocking procedure according to an embodiment of the invention.
FIG. 4 is a flowchart of a second electronic unlocking procedure according to an embodiment of the invention.
FIG. 5 is a flowchart of a token updating procedure according to an embodiment of the invention.
FIG. 6 is a flowchart of a mobile device replacing procedure according to an embodiment of the invention.

### DETAILED DESCRIPTION OF THE INVENTION

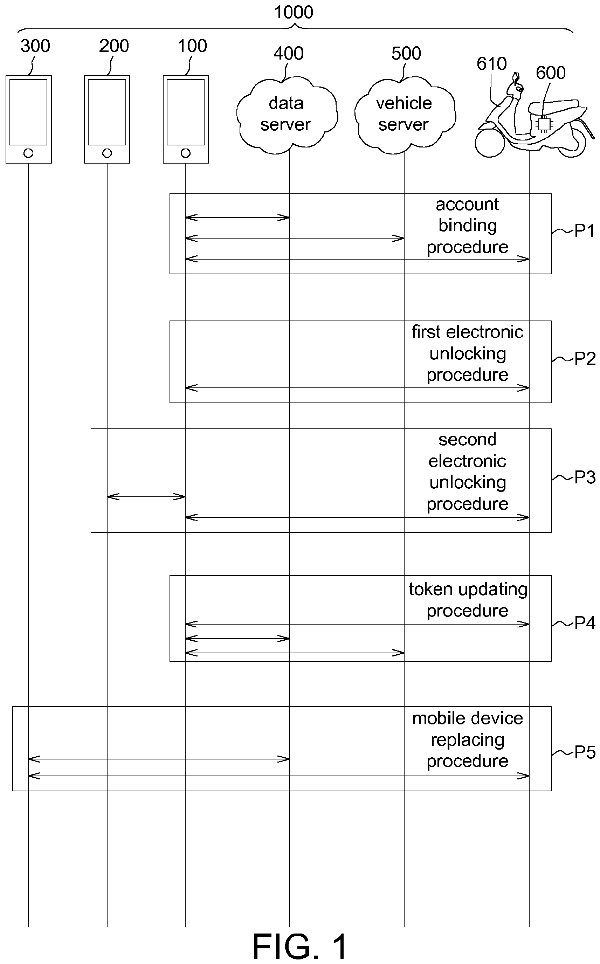

Referring to FIG. 1, a schematic diagram of a security system 1000 of a vehicle 610 according to an embodiment of the invention is shown. The vehicle 610 can be realized by such as a motor bike, a car, a bicycle or a yacht. The architecture of the security system 1000 can be formed of a vehicle processing device 600 of the vehicle 610, a first mobile device 100, a data server 400 and a vehicle server 500. The first mobile device 100 can be realized by such as a smart phone, a smart watch, a smart bracelet, a PC tablet, a smart helmet, a pair of smart gloves, a smart clothing or a laptop. The data server 400 and the vehicle server 500 can be formed of one or more than one computer. The vehicle processing device 600 can be realized by such as a chip, a circuit board, a computer or a circuit board. In another embodiment, the data server 400 and the vehicle server 500 can be integrated as a server. The security system 1000 mainly allows the first mobile device 100 to be used as an electronic key of the vehicle 610. The user can unlock the vehicle 610 using the first mobile device 100. Or, the security system 1000 may allow the electronic key provided by the first mobile device 100 to work in conjunction with a physical key to increase security.

In another embodiment, the architecture of the security system 1000 may further include a second mobile device 200, such that the user can set different authority limits to the electronic key.

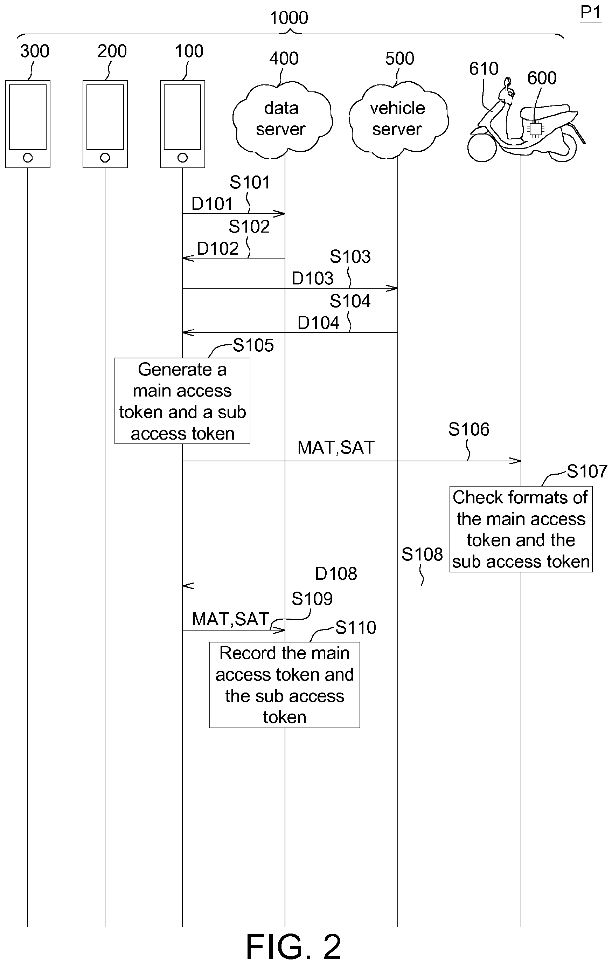

The operation of the security system 1000 includes an account binding procedure P1, a first electronic unlocking procedure P2, a second electronic unlocking procedure P3, a token updating procedure P4 and a mobile device replacing procedure P5. In the account binding procedure P1, the vehicle processing device 600 of the vehicle 610 obtains a main access token MAT (designated in FIG. 2) and a sub access token SAT (designated in FIG. 2) from the first mobile device 100. The main access token MAT is for the first mobile device 100 to perform a first electronic unlocking procedure P2. The sub access token SAT is for the second mobile device 200 to perform a second electronic unlocking procedure P3.

In the token updating procedure P4, the sub access token SAT can be updated, such that the second mobile device 200, despite having obtained the sub access token SAT, can no longer be used as an electronic key.

In the mobile device replacing procedure P5, the architecture of the security system 1000 may include a third mobile device 300, which can replace the function of the first mobile device as an electronic key when the user gets lost of the first mobile device 100.

Detailed descriptions of the account binding procedure P1, the first electronic unlocking procedure P2, the second electronic unlocking procedure P3, the token updating procedure P4 and the mobile device replacing procedure P5 are disclosed below with a number of flowcharts.

Referring to FIG. 2, a flowchart of the account binding procedure P1 according to an embodiment of the invention is shown. In step S101, the first mobile device 100 transmits an account application request D101 to apply for a driver account D102 with the data server 400.

In step S102, through a particular registration procedure, the data server responds the driver account D102 to the first mobile device 100.

In step S103, the first mobile device 100 transmits an engine number D103 to the vehicle server 500. Each vehicle 610 has one specific engine number only, and different engine numbers D103 correspond to different vehicles 610. In the present step, apart from the engine number D103, other types of identification code can also be used as long as the identification code possesses uniqueness for the vehicle 610.

In step S104, the vehicle server 500 responds a median access control code (MAC code) D104 of the first mobile device 100 for the first mobile device 100 to communicate with the vehicle server 500.

In step S105, the first mobile device 100 generates a main access token MAT and a sub access token SAT. In the present step, the main access token MAT and the sub access token SAT can be generated from random numbers. Or, the main access token MAT and the sub access token SAT can be generated from the computation of the instant time or the IMEI code of the first mobile device 100.

In step S106, the first mobile device 100 transmits the main access token MAT and the sub access token SAT to the vehicle processing device 600.

In step S107, the vehicle processing device 600 checks whether the formats of the main access token MAT and the sub access token SAT meet the requirement, such as the coding length and the coding order.

In step S108, if formats of the main access token MAT and the sub access token SAT meet a requirement, then the vehicle processing device 600 transmits a binding success message D108 to the first mobile device 100.

In step S109, the first mobile device 100, after receiving the binding success message D108, transmits the main access token MAT and the sub access token SAT to the data server 400.

In step S110, the data server 400 records the main access token MAT and the sub access token SAT. For example, the data server 400 records the relationship the main access token MAT and the sub access token SAT and the first mobile device 100 and the vehicle processing device 600 in a look-up table.

Through the above steps S101 to S110, the account binding procedure P1 of the present embodiment is completed.

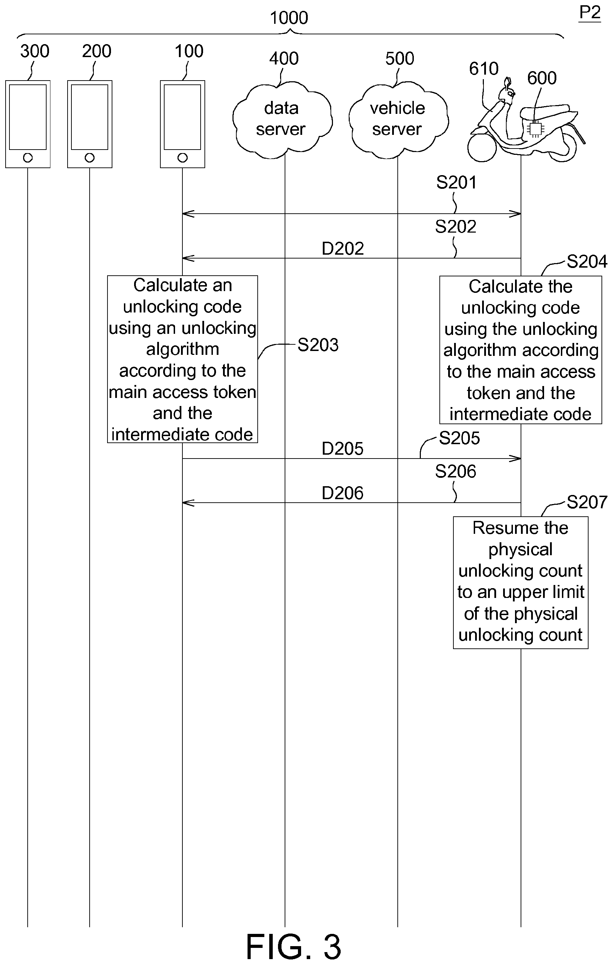

Referring to FIG. 3, a flowchart of the first electronic unlocking procedure P2 according to an embodiment of the invention is shown. In the first electronic unlocking procedure P2, the first mobile device 100 unlocks the vehicle 610 using the main access token MAT.

In step S201, the first mobile device 100 and the vehicle processing device 600 perform a communication connection. For example, the first mobile device 100 and the vehicle processing device 600 can be connected through a Bluetooth communication. Or, in another embodiment, the first mobile device 100 and the vehicle processing device 600 can be connected through a WiFi network.

In step S202, the vehicle processing device 600 transmits an intermediate code D202 to the first mobile device 100. The intermediate code D202 can be generated from a random number or an instant time.

In step S203, the first mobile device 100 calculates an unlocking code D205 using an unlocking algorithm according to the main access token MAT and the intermediate code D202.

In step S204, the vehicle processing device 600 calculates the unlocking code D205 using the unlocking algorithm according to the main access token MAT and the intermediate code D202.

In step S205, the first mobile device 100 transmits the unlocking code D205 to the vehicle processing device 600 to determine whether to allow the first mobile device 100 to activate the vehicle 610. The unlocking algorithm performed in step S203 is the same as that performed in step S204. Therefore, as long as the main access token MAT stored in the first mobile device 100 and the main access token MAT stored in the vehicle processing device 600 are the same, the first mobile device 100 and the vehicle processing device 600 can obtain the same unlocking code D205. As long as the unlocking code D205 obtained by the first mobile device 100 is the same as that obtained by the vehicle processing device 600, the first mobile device 100 can be allowed to activate the vehicle 610. On the contrary, when a mobile device (not designated) performs computation using an erroneous main access token (not designated), the mobile device will not obtain the same unlocking code (not designated) and will not be allowed to activate the vehicle 610.

In step S206, the vehicle processing device 600 transmits an unlocking success message D206 to the first mobile device 100.

Thus, only the first mobile device 100 storing the correct main access token MAT can be used as the electronic key of the vehicle 610.

Then, the method proceeds to step S207, an available number of times of physical unlocking is resumed to an upper limit of the number of times of physical unlocking. The "available number of times of physical unlocking" is limited to be within the "upper limit of the number of times of physical unlocking", such as 5 times. Each time when the physical key is used, the "available number of times of physical unlocking" will be progressively decreased by 1. When the "available number of times of physical unlocking" is progressively decreased to 0, this means that the vehicle 610 cannot be activated. Therefore, when the user gets lost of the physical key, the burglar can only use the physical key within the "upper limit of the number of times of physical unlocking", and the burglary of the vehicle 610 can thus be effectively deterred. In the present step, the user already activates the vehicle 610 using the electronic key, so the "available number of times of physical unlocking" can be resumed to the "upper limit of the number of times of physical unlocking".

Through the above steps S201 to S207, the first electronic unlocking procedure P2 of the present embodiment is completed.

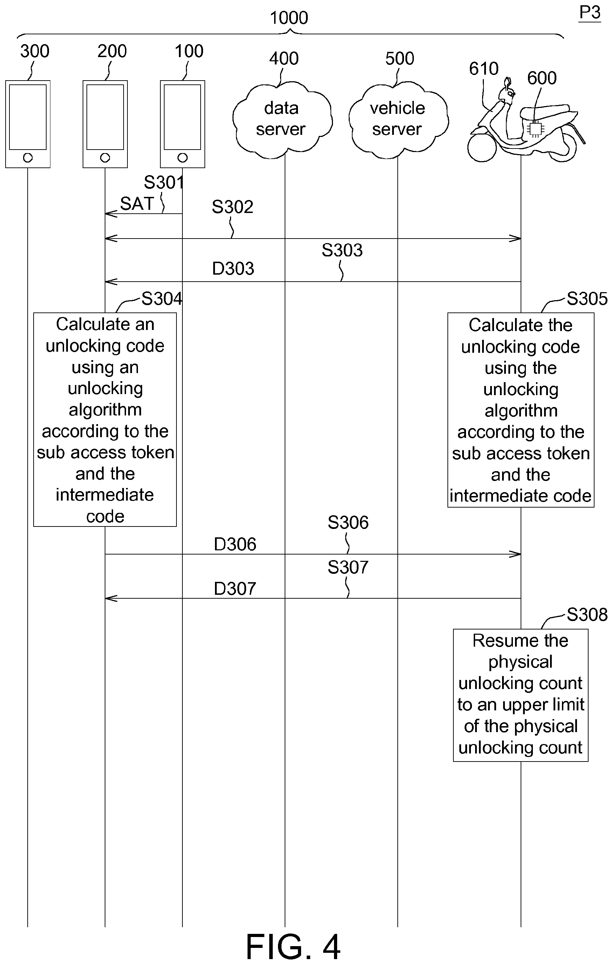

Referring to FIG. 4, a flowchart of the second electronic unlocking procedure P3 according to an embodiment of the invention is shown. In the second electronic unlocking procedure P3, the second mobile device 200 unlocks the vehicle 610 using the sub access token SAT.

In step S301, the first mobile device 100 transmits the sub access token SAT to the second mobile device 200. In the present step, the sub access token SAT can be transmitted through a quick response code (QR code) or a Bluetooth communication.

In step S302, the second mobile device 200 performs a communication connection with the vehicle processing device 600. For example, the second mobile device 200 and the vehicle processing device 600 can be connected through a Bluetooth communication. Or, in another embodiment, the second mobile device 200 and the vehicle processing device 600can be connected through a WiFi network.

In step S303, the vehicle processing device 600 transmits an intermediate code D303 to the second mobile device 200. The intermediate code D303 can be generated from a random number or an instant time.

In step S304, the second mobile device 200 calculates an unlocking code D306 using an unlocking algorithm according to the sub access token SAT and the intermediate code D303.

In step S305, the vehicle processing device 600 calculates the unlocking code D306 using the unlocking algorithm according to the sub access token SAT and the intermediate code D303.

In step S306, the second mobile device 200 transmits the unlocking code D306 to the vehicle processing device 600 to determine whether to allow the second mobile device 200 to activate the vehicle 610. The unlocking algorithm performed in step S304 is the same as that performed in step S305. Therefore, as long as the sub access token SAT stored in the second mobile device 200 and the sub access token SAT stored in the vehicle processing device 600 are the same, the second mobile device 200 and the vehicle processing device 600 can obtain the same unlocking code D306. As long as the unlocking code D306 obtained by the second mobile device 200 is the same as that obtained by the vehicle processing device 600, the second mobile device 200 can be allowed to activate the vehicle 610. On the contrary, when a mobile device (not designated) performs computation using an erroneous sub access token (not designated), the mobile device will not obtain the same unlocking code (not designated) and will not be allowed to activate the vehicle 610.

In step S307, the vehicle processing device 600 transmits an unlocking success message D307 to the second mobile device 200.

Thus, only the second mobile device 200 storing the correct sub access token SAT can be used as the electronic key of the vehicle 610.

In step S308, the available number of times of physical unlocking is resumed to the upper limit of the number of times of physical unlocking.

Through the above steps S301 to S308, the second electronic unlocking procedure P3 of the present embodiment is completed.

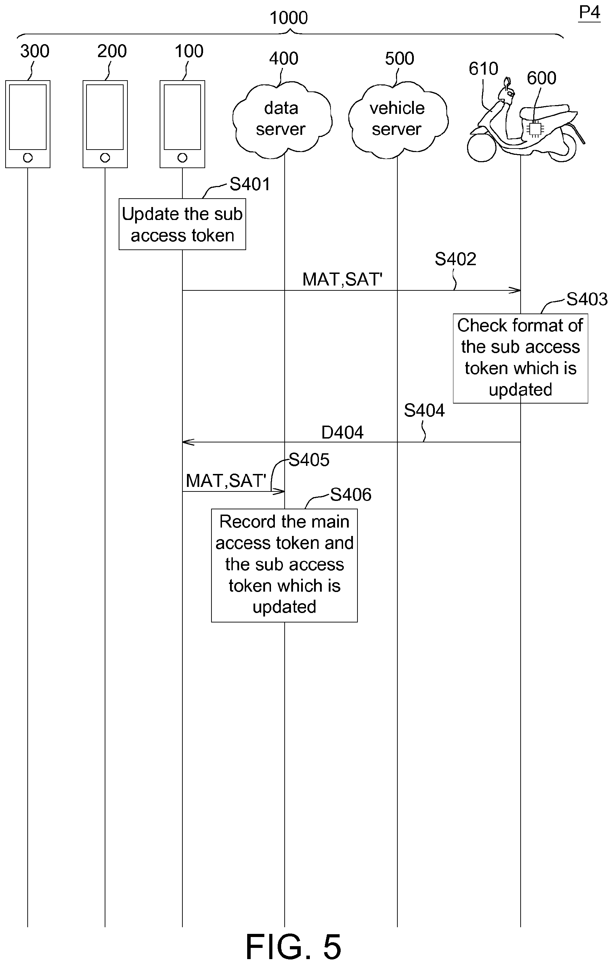

Referring to FIG. 5, a flowchart of the token updating procedure P4 according to an embodiment of the invention is shown. In the token updating procedure P4, the sub access token SAT can be updated, such that the second mobile device 200, despite having obtained the sub access token SAT, can no longer be used as an electronic key.

In step S401, the first mobile device 100 updates the sub access token SAT. The sub access token SAT can be updated using an algorithm or through a user setting.

In step S402, the first mobile device 100 transmits an updated sub access token SAT' to the vehicle processing device 600.

In step S403, the vehicle processing device 600 checks whether the format of the updated sub access token SAT' meets the requirement, such as the coding length and the coding order.

In step S404, if the format of the updated sub access token SAT' meets the requirement, then the vehicle processing device 600 transmits a binding success message D404 to the first mobile device 100.

In step S405, the first mobile device 100, after receiving the binding success message D404, transmits the main access token MAT and the updated sub access token SAT' to the data server 400.

In step S406, the data server 400 records the main access token MAT and the updated sub access token SAT'. For example, the data server 400 records the relationship between the main access token MAT and the updated sub access token SAT' and the first mobile device 100 and the vehicle processing device 600 in a look-up table.

Through the above steps S401 to S406, the token updating procedure P4 of the present embodiment is completed.

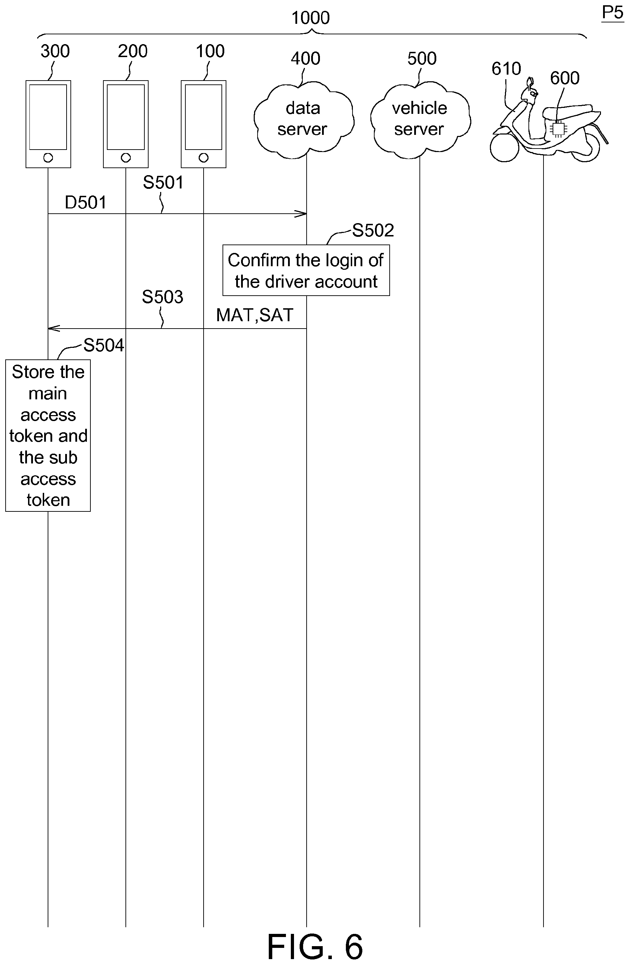

Referring to FIG. 6, a flowchart of the mobile device replacing procedure P5 according to an embodiment of the invention is shown. In the mobile device replacing procedure P5, the architecture of the security system 1000 may further include a third mobile device 300, which can replace the function of the first mobile device as an electronic key when the user gets lost of the first mobile device 100.

In step S501, the third mobile device 300 logs in to the data server 400 using a driver account D501, such as the driver account D102 of FIG. 2.

In step S502, the data server 400 confirms the login of the driver account D501.

In step S503, when the login of the third mobile device 300 is successful, the data server 400 responds a main access token MAT and a sub access token SAT to the third mobile device 300.

In step S504, the third mobile device 300 stores the main access token MAT and the sub access token SAT. The third mobile device 300, after storing the main access token MAT and the sub access token SAT, performs the first electronic unlocking procedure P2 of FIG. 3 or assists the second mobile device 200 to perform the second electronic unlocking procedure P3 of FIG. 4.

Through the above steps S501 to S504, the mobile device replacing procedure P5 of the present embodiment is completed.

According to the embodiments disclosed above, the security system 1000 mainly allows the first mobile device 100 to be used as an electronic key of the vehicle 610. The user can unlock the vehicle 610 using the first mobile device 100. Or, the security system 1000 allows the electronic key provided by the first mobile device 100 to work in conjunction with a physical key to increase security. Besides, the architecture of the security system 1000 may also include a second mobile device 200, such that the user can set different authority limits to the electronic key. Moreover, the sub access token SAT can be updated, such that the second mobile device 200, despite having obtained the sub access token, can no longer be used as an electronic key. Additionally, the architecture of the security system 1000 may include a third mobile device, which can replace the function of the first mobile device as an electronic key when the user gets lost of the first mobile device 100.

While the invention has been described by example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. An operating method of a vehicle security system (1000), **characterized in that** the operating method comprises:
performing an account binding procedure (P1) between a first mobile device (100) and a vehicle (610), such that a vehicle processing device (600) of the vehicle (610) obtains a main access token (MAT) for the first mobile device (100) to perform a first electronic unlocking procedure (P2) and a sub access token (SAT) for a second mobile device (200) to perform a second electronic unlocking procedure (P3); and
performing the second electronic unlocking procedure (P3) by the second mobile device (200) according to the sub access token (SAT).

2. The operating method of the vehicle security system according to claim 1, wherein the step of performing the account binding procedure comprises:
applying for a driver account with a data server by the first mobile device;
transmitting an engine number to a vehicle server by the first mobile device;
responding a median access control code (MAC code) of the first mobile device by the vehicle server for the first mobile device to communicate with the vehicle server;
generating the main access token and the sub access token by the first mobile device;
transmitting the main access token and the sub access token to the vehicle processing device by the first mobile device;
checking formats of the main access token and the sub access token by the vehicle processing device;
transmitting a binding success message to the first mobile device by the vehicle processing device if the formats of the main access token and the sub access token meet a requirement; and
transmitting the main access token and the sub access token to the data server by the first mobile device having received the binding success message.

3. The operating method of the vehicle security system according to claim 1, wherein the step of performing the second electronic unlocking procedure comprises:
performing a communication connection with the vehicle processing device by the second mobile device;
transmitting an intermediate code to the second mobile device by the vehicle processing device;
calculating an unlocking code according to the sub access token and the intermediate code by the second mobile device using an unlocking algorithm; and
transmitting the unlocking code to the vehicle processing device by the second mobile device to determine whether to allow the second mobile device to activate the vehicle;
wherein after the second mobile device activates the vehicle, the step of performing the second electronic unlocking procedure further comprises:
resuming an available number of times of physical unlocking to an upper limit of the number of times of physical unlocking.

4. The operating method of the vehicle security system according to claim 1, further comprising:
performing the first electronic unlocking procedure by the first mobile device according to the main access token;
wherein the step of performing the first electronic unlocking procedure comprises:
performing a communication connection with the vehicle processing device by the first mobile device;
transmitting an intermediate code to the first mobile device by the vehicle processing device;
calculating an unlocking code according to the main access token and the intermediate code by the first mobile device using an unlocking algorithm; and
transmitting the unlocking code to the vehicle processing device by the first mobile device to determine whether to allow the first mobile device to activate the vehicle.

5. The operating method of the vehicle security system according to claim 4, wherein after the first mobile device activates the vehicle, the step of performing the first electronic unlocking procedure further comprises:
resuming an available number of times of physical unlocking to an upper limit of the number of times of physical unlocking.

6. The operating method of the vehicle security system according to claim 1, further comprising:
performing a token updating procedure by the first mobile device to update the sub access token;
wherein the step of performing the token updating procedure comprises:
updating the sub access token by the first mobile device;
transmitting the sub access token which is updated to the vehicle processing device by the first mobile device;
checking a format of the sub access which is updated token by the vehicle processing device;
transmitting a binding success message to the first mobile device by the vehicle processing device if the format of the sub access token which is updated meets a requirement; and
transmitting the main access token and the sub access token which is updated to a data server by the first mobile device.

7. The operating method of the vehicle security system according to claim 1, further comprising:
performing a mobile device replacing procedure to replace the first mobile device by a third mobile device;
wherein the step of performing the mobile device replacing procedure comprises:
logging in to a data server by the third mobile device using a driver account; and
responding the main access token and the sub access token to the third mobile device by the data server.

8. A vehicle security system (1000), **characterized in that** the vehicle security system (1000) comprises:
a vehicle processing device (600) disposed on a vehicle (610);
a first mobile device (100) performing an account binding procedure (P1), such that the vehicle processing device (600) obtains a main access token (MAT) and a sub access token (SAT), wherein the first mobile device (100) further performs a first electronic unlocking procedure (P2) according to the main access token (MAT); and
a second mobile device (200) performing a second electronic unlocking procedure (P3) according to the sub access token (SAT).

9. The vehicle security system according to claim 8, further comprising:
a data server, wherein in the account binding procedure, the first mobile device applies for a driver account with the data server; after the account binding procedure is completed, the data server receives the main access token and the sub access token from the first mobile device; and
a vehicle server, wherein in the account binding procedure, the vehicle server receives an engine number from the first mobile device and responds a median access control code (MAC code) of the first mobile device for the first mobile device to communicate with the vehicle server;
wherein in the account binding procedure, the vehicle processing device checks formats of the main access token and the sub access token, and transmits a binding success message to the first mobile device if the formats of the main access token and the sub access token meet a requirement.

10. The vehicle security system according to claim 8, wherein, in the second electronic unlocking procedure, the vehicle processing device transmits an intermediate code to the second mobile device for the second mobile device to calculate an unlocking code using an unlocking algorithm according to the sub access token and the intermediate code; and
the vehicle processing device, after receiving the unlocking code from the second mobile device, determines whether to allow the second mobile device to activate the vehicle;
wherein in the second electronic unlocking procedure, the vehicle processing device further resumes an available number of times of physical unlocking to an upper limit of the number of times of physical unlocking.

11. The vehicle security system according to claim 10, wherein the first mobile device performs the first electronic unlocking procedure according to the main access token.

12. The vehicle security system according to claim 10, wherein in the first electronic unlocking procedure, the vehicle processing device transmits the intermediate code to the first mobile device for the first mobile device to calculate an unlocking code using an unlocking algorithm according to the main access token and the intermediate code; and
the vehicle processing device, after receiving the unlocking code from the first mobile device, determines whether to allow the first mobile device to activate the vehicle.

13. The vehicle security system according to claim 12, wherein in the first electronic unlocking procedure, the vehicle processing device further resumes an available number of times of physical unlocking to an upper limit of the number of times of physical unlocking.

14. The vehicle security system according to claim 8, wherein the first mobile device further performs a token updating procedure to update the sub access token;
wherein in the token updating procedure, the first mobile device updates the sub access token and transmits the sub access token which is updated to the vehicle processing device; the vehicle processing device checks format of the sub access token which is updated, and transmits a binding success message to the first mobile device if the format of the sub access token which is updated meets a requirement.

15. The vehicle security system according to claim 8, wherein the first mobile device further performs a mobile device replacing procedure to replace the first mobile device by a third mobile device;
wherein in the mobile device replacing procedure, a data server allows the third mobile device to log in to using a driver account and responds the main access token and the sub access token to the third mobile device.
